(19) Europäisches Patentamt

European Patent Office

Office européen des brevets

(11) **EP 1 052 838 A1**

(12) **DEMANDE DE BREVET EUROPEEN**

(43) Date de publication:
**15.11.2000 Bulletin 2000/46**

(51) Int Cl.⁷: **H04M 9/08**

(21) Numéro de dépôt: **00401266.2**

(22) Date de dépôt: **09.05.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **12.05.1999 FR 9906087**

(71) Demandeur: **Matra Nortel Communications
29100 Quimper (FR)**

(72) Inventeurs:
• **Berthault, Frédéric
78350 Jouy en Josas (FR)**
• **Capman, François
78000 Versailles (FR)**

(74) Mandataire: **Loisel, Bertrand
Cabinet Plasseraud,
84, rue d'Amsterdam
75440 Paris Cédex 09 (FR)**

(54) **Procédé et dispositif d'annulation d'écho stéréophonique à filtrage dans le domaine fréquentiel**

(57)   Un annuleur d'écho stéréophonique fréquentiel a ses coefficients de filtrage adaptés selon une méthode tenant compte de l'intercorrélation entre les signaux d'entrée ($x_1$, $x_2$) relatifs aux deux voies. L'adaptation tient compte en particulier de la fonction de cohérence, d'une manière qui permet de limiter les problèmes rencontrés habituellement avec les schémas d'annulation stéréophonique en présence de signaux d'entrée relativement corrélés.

FIG.1.

EP 1 052 838 A1

## Description

La présente invention concerne les annuleurs d'écho acoustique, traitant dans le domaine fréquentiel des signaux d'entrée stéréophoniques.

Le phénomène d'écho acoustique intervient chaque fois qu'il existe un couplage important entre un microphone et un haut-parleur. Le microphone capte alors une partie retardée et atténuée du signal d'entrée diffusé par le haut-parleur dans l'espace acoustique. On parle d'écho acoustique stéréophonique, ou plus généralement multi-voies, lorsque le microphone capte simultanément les échos provenant de plusieurs haut-parleurs.

Les annuleurs d'écho acoustique modélisent généralement le chemin acoustique entre chaque haut-parleur et le microphone par un filtre adaptatif dont les coefficients sont remis à jour par des algorithmes de type gradient stochastique: NLMS (« Normalised Least Mean Squares »), APA (« Affine Projection Algorithm »), FDAF (« Frequency Domain Adaptive Filter »), etc., ou de type moindres carrés exacts : RLS (« Recursive Least Squares »).

Il est communément admis que les performances des algorithmes de filtrage adaptatif se dégradent lorsque l'on met en oeuvre des systèmes d'annulation d'écho acoustique multi-voies en présence de signaux d'entrée fortement corrélés (voir F. Amand et al, « Multi-channel acoustic echo cancellation », Proc. 4th International Workshop on Acoustic Echo and Noise Control, Roros, Juin 1995, pages 57-60; M. Mohan Sondhi et al, « Stereophonic Acoustic Echo Cancellation - An Overview of the Fundamental Problem », IEEE Signal Processing Letters, Vol. 2, No. 8, août 1995, pages 148-151). Différentes solutions ont été proposées pour tenter de résoudre ce problème :

- l'utilisation de filtres monophoniques (A. Hirano et al, « A Compact MultiChannel Echo Canceller with a single Adaptive Filter per Channel », Proc. ICASSP 1992, pages 1922-1925; S. Minami, « A Stereophonic Echo Canceler Using Single Adaptive Filter », Proc. ICASSP 1995, pages 3027-3030) ;
- la modification d'algorithmes de type gradient temporel (F. Amand et al, « Un algorithme d'annulation d'écho stéréo de type LMS prenant en compte l'inter-corrélation des entrées », Quinzième colloque GRETSI, Juan-les-Pins, septembre 1995, pages 407-410 ; J. Benesty et al, « Un algorithme de projection à deux voies avec contraintes - Application à l'annulation d'écho acoustique stéréophonique », Quinzième colloque GRETSI, Juan-les-Pins, septembre 1995, pages 387-390) ;
- la décorrélation des signaux avant de les diffuser (J. Benesty et al, « A Hybrid Mono/Stereo Acoustic Echo Canceler », IEEE Worshop on application of signal processing and acoustics (WASPAA'97)).

Les annuleurs d'écho selon l'invention trouvent notamment des applications dans les systèmes de communication multi-voies, en particulier de visioconférence (voir P. Heitkamper et al, « Stereophonic and multichannel Hands-Free Speaking », Proc. 4th International Workshop on Acoustic Echo and Noise Control, Roros, Juin 1995, pages 53-56; Y. Mahieux et al, « Annulation d'écho en téléconférence stéréophonique », 14ème GRETSI, Juan-Les-Pins, septembre 1993, pages 515-518), dans les téléphones mains-libres et dans les systèmes de reconnaissance vocale (voir M. Glanz et al, « Speech Recognition In Cars With Noise Suppression and Car Radio Compensation », 22nd ISATA, Florence, mai 1990, pages 509-516; F. Berthault et al « Stereophonic Acoustic Echo Cancellation - Application to speech recognition : Some experimental results », 5th International Workshop on Acoustic Echo and Noise Control, London, Septembre 1997, pages 96-99).

Les annuleurs d'écho stéréophoniques fréquentiels mettent en oeuvre un procédé dans lequel on applique des premier et second signaux d'entrée à un système générateur d'écho, et on recueille un signal d'observation en sortie dudit système, les signaux d'entrée étant échantillonnés numériquement et traités par blocs successifs de 2N échantillons avec passage dans le domaine fréquentiel selon un ensemble de 2N fréquences. Selon ce procédé, le traitement d'un bloc de 2N échantillons comporte les étapes suivantes :

- transformer le premier signal d'entrée du domaine temporel vers le domaine fréquentiel pour obtenir un vecteur $\underline{X}_1$ ayant 2N composantes complexes relatives à l'ensemble de 2N fréquences, incluant des composantes spectrales du premier signal d'entrée relatives à un sous-ensemble de l'ensemble de 2N fréquences ;
- transformer le second signal d'entrée du domaine temporel vers le domaine fréquentiel pour obtenir un vecteur $\underline{X}_2$ ayant 2N composantes complexes relatives à l'ensemble de 2N fréquences, incluant des composantes spectrales du second signal d'entrée relatives audit sous-ensemble de fréquences ;
- multiplier terme à terme le vecteur $\underline{X}_1$ par un vecteur $\underline{H}_1$ de 2N coefficients complexes pour produire des premières composantes spectrales d'écho estimé relatives aux fréquences du sous-ensemble ;
- multiplier terme à terme le vecteur $\underline{X}_2$ par un vecteur $\underline{H}_2$ de 2N coefficients complexes pour produire des secondes composantes spectrales d'écho estimé relatives aux fréquences du sous-ensemble ;
- additionner les première et seconde composantes spectrales d'écho estimé relatives à chaque fréquence du sous-ensemble pour obtenir une composante spectrale appartenant à un vecteur de 2N composantes spectrales d'écho total estimé ;

- transformer le vecteur de 2N composantes spectrales d'écho total estimé du domaine fréquentiel vers le domaine temporel pour obtenir un écho total estimé ;
- soustraire l'écho total estimé du signal d'observation pour produire un signal d'erreur ;
- transformer le signal d'erreur du domaine temporel vers le domaine fréquentiel pour obtenir un vecteur $\underline{E}$ de 2N composantes spectrales du signal d'erreur relatives à l'ensemble de 2N fréquences ; et
- mettre à jour les vecteurs $\underline{H}_1$ et $\underline{H}_2$ pour le traitement du bloc suivant, à partir des vecteurs $\underline{X}_1$, $\underline{X}_2$ et $\underline{E}$.

Dans les réalisations connues, ledit sous-ensemble de fréquences représente la totalité de l'ensemble de 2N fréquences.

Habituellement (algorithme FDAF stéréophonique), la mise à jour des vecteurs $\underline{H}_1$ et $\underline{H}_2$ pour le traitement du bloc suivant tient compte du gradient de l'énergie du signal d'erreur, estimé par $\underline{\nabla}_i = \underline{X}_i^* \otimes \underline{E}$ pour le vecteur $\underline{H}_i$ (i=1 ou 2), où $\otimes$ désigne le produit terme à terme de deux vecteurs, et $(.)^*$ le complexe conjugué.

Le gradient est généralement normalisé : $\underline{\nabla}_{Ni} = \underline{B}_i \otimes \underline{\nabla}_i$ pour i=1 ou 2, où $\underline{B}_i$ est un vecteur de taille 2N dont le terme correspondant à la fréquence f est l'inverse de l'énergie spectrale $P_{ii}(f)$ du i-ième signal d'entrée évaluée à la fréquence f (en d'autres termes, $P_{ii}(f) = <X_i(f).X_i(f)^*>$ est une moyenne courante de $|X_i(f)|^2 = X_i(f).X_i(f)^*$, où $X_i(f)$ est la composante du vecteur $\underline{X}_i$ relative à la fréquence f).

En outre, le gradient normalisé est souvent contraint afin de ne retenir que les termes de convolution linéaire du calcul fréquentiel des gradients : $\underline{\nabla}_{Ci} = \underline{C}.\underline{\nabla}_{Ni}$ pour i=1 ou 2, où $\underline{C}$ désigne une matrice de contrainte constante.

L'adaptation des filtres d'estimation d'écho est finalement donnée par $\underline{H}_i(k+1) = \underline{H}_i(k) + \mu.\underline{\nabla}_{Ci}(k)$ pour i=1 ou 2, l'indice k numérotant les blocs d'analyse successifs. Le coefficient $\mu$, compris entre 0 et 1, est appelé pas d'adaptation.

On constate que chaque voie de traitement fait l'objet d'une adaptation séparée déterminée par le signal d'erreur et par le signal d'entrée relatif à cette voie. Ceci explique les erreurs d'identification que peut commettre l'algorithme en présence de signaux d'entrée corrélés: deux erreurs d'estimation des vecteurs $\underline{H}_1$ et $\underline{H}_2$ peuvent se compenser dans le signal d'erreur sans pouvoir être rectifiées par l'algorithme.

La présence invention a pour but de proposer un autre mode d'adaptation de filtres stéréophoniques fréquentiels qui permette la prise en compte d'un certain degré de corrélation entre les signaux.

L'invention propose ainsi un procédé tel qu'énoncé en introduction, dans lequel on calcule une énergie spectrale $P_{11}(f)$ du premier signal d'entrée, une énergie spectrale $P_{22}(f)$ du second signal d'entrée, une énergie interspectrale $P_{12}(f)$ des premier et second signaux d'entrée et une valeur de cohérence $\Gamma(f)$, pour chacune des fréquences f de l'ensemble de 2N fréquences. Selon ce procédé, la mise à jour du vecteur $\underline{H}_1$ pour le traitement du bloc suivant est effectuée sur la base d'un gradient modifié de la forme :

$$\underline{\nabla}_{M1} = \underline{A}_{11} \otimes \underline{\nabla}_1 + \underline{A}_{12} \otimes \underline{\nabla}_2 = (\underline{A}_{11} \otimes \underline{X}_1^* + \underline{A}_{12} \otimes \underline{X}_2^*) \otimes \underline{E} \qquad (1)$$

où $\underline{A}_{11}$ désigne un vecteur de taille 2N dont la composante relative à la fréquence f est $\frac{1}{P_{11}(f).(1-G(f))}$, et $\underline{A}_{12}$ désigne un vecteur de taille 2N dont la composante relative à la fréquence f est $\frac{-G(f)}{P_{12}(f).(1-G(f))}$, G(f) étant une fonction réelle croissante de la valeur de cohérence r(f), telle que $0 \leq G(f) < 1$. D'autre part, la mise à jour du vecteur $\underline{H}_2$ pour le traitement du bloc suivant est effectuée sur la base d'un gradient modifié de la forme :

$$\underline{\nabla}_{M2} = \underline{A}_{22} \otimes \underline{\nabla}_2 + \underline{A}_{12}^* \otimes \underline{\nabla}_1 = (\underline{A}_{22} \otimes \underline{X}_2^* + \underline{A}_{12}^* \otimes \underline{X}_1^*) \otimes \underline{E} \qquad (2)$$

où $\underline{A}_{22}$ désigne un vecteur de taille 2N dont la composante relative à la fréquence f est $\frac{1}{P_{22}(f).(1-G(f))}$.

Un autre aspect de la présente invention se rapporte à un annuleur d'écho stéréophonique agencé pour mettre en oeuvre un procédé tel que défini ci-dessus.

La normalisation du gradient tient compte de termes croisés entre les deux voies, avec une pondération déterminée par la cohérence entre les deux signaux d'entrée. Cette façon d'adapter les coefficients du filtre représentés par les composantes de $\underline{H}_1$ et $\underline{H}_2$ peut être dérivée d'un algorithme de type « bloc Newton » exprimé dans le domaine fréquentiel, avec des hypothèses restreintes sur la forme des matrices de corrélation des signaux.

Dans un mode de réalisation préféré du procédé, les énergies spectrales $P_{11}(f)$ et $P_{22}(f)$ sont respectivement des moyennes de $|X_1(f)|^2$ et $|X_2(f)|^2$, et l'énergie interspectrale $P_{12}(f)$ est une moyenne de $\rho.X_1(f).X_2(f)^*$, où $X_1(f)$ et $X_2(f)$ représentent respectivement les composantes des vecteurs $\underline{X}_1$ et $\underline{X}_2$ relatives à la fréquence f, et $\rho$ est un coefficient réel tel que $0 < \rho \leq 1$. Ce coefficients $\rho$ permet une prise en compte plus ou moins importante des termes croisés dans l'adaptation des filtres. Quand $\rho$ tend vers 0, on retrouve l'algorithme FDAF stéréophonique classique. Si $\rho=1$, on tient entièrement compte de la corrélation éventuelle des signaux d'entrée.

La fonction G(f) peut a priori être égale à la valeur de cohérence $\Gamma(f)$. Toutefois, on choisira de préférence une fonction non-linéaire de cette valeur de cohérence.

Ledit sous-ensemble de fréquences, pour lequel on effectue l'annulation d'écho suivant le procédé ci-dessus, peut représenter la totalité de l'ensemble de 2N fréquences.

Dans une variante de réalisation avantageuse, ce sous-ensemble de fréquences est composé de fréquences pour lesquelles les premier et second signaux d'entrée vérifient un critère de corrélation.

On peut ainsi réaliser un annuleur d'écho hybride mono/stéréophonique, en décidant dynamiquement si chaque fréquence doit plutôt faire l'objet d'un processus monophonique (signaux relativement corrélés) ou d'un processus stéréophonique (signaux relativement peu corrélés).

Pour cela, les composantes des vecteurs $\underline{X}_1$ et $\underline{X}_2$ relatives aux fréquences de l'ensemble de 2N fréquences n'appartenant pas audit sous-ensemble sont nulles, et on forme des vecteurs $\underline{X}_1'$ et $\underline{X}_2'$ de 2N composantes complexes nulles pour les fréquences dudit sous-ensemble, et respectivement égales aux composantes spectrales des premier et second signaux d'entrée pour les fréquences de l'ensemble de 2N fréquences n'appartenant pas audit sous-ensemble. On sélectionne alors l'un des vecteurs $\underline{X}_1'$ et $\underline{X}_2'$, qu'on multiplie terme à terme par un vecteur $\underline{H}'$ pour obtenir des composantes spectrales d'écho monophonique estimé pour les fréquences de l'ensemble de 2N fréquences n'appartenant pas audit sous-ensemble, et on complète le vecteur de 2N composantes spectrales d'écho total estimé avec lesdites composantes spectrales d'écho monophonique estimé. Le vecteur $\underline{H}'$ est typiquement mis à jour sur la base d'un terme de gradient proportionnel au produit terme à terme du vecteur $\underline{E}$ et du vecteur complexe conjugué du vecteur $\underline{X}_1'$ ou $\underline{X}_2'$ sélectionné.

Le vecteur $\underline{X}_1'$ ou $\underline{X}_2'$ sélectionné est de préférence celui qui présente une avance temporelle par rapport à l'autre, pour vérifier la condition de causalité.

Le critère de corrélation utilisé peut être évalué au moyen de la valeur de cohérence calculée pour chacune des fréquences de l'ensemble de 2N fréquences.

Il est à noter que cette dernière variante peut s'appliquer généralement à tout schéma d'annulation d'écho stéréophonique dans le domaine fréquentiel, mais aussi dans le domaine temporel (en pleine bande ou avec décomposition en sous-bandes). Après une analyse en fréquence des corrélations que présentent les signaux d'entrée, on peut appliquer une annulation d'écho de type stéréophonique aux fréquences pour lesquelles l'analyse révèle une corrélation faible, et une annulation d'écho de type monophonique aux fréquences pour lesquelles l'analyse révèle une corrélation forte. Un tel annuleur d'écho hybride présente plus de flexibilité que les annuleurs d'écho hybrides utilisant une limite fréquentielle fixe avec un schéma de type stéréophonique aux basses fréquences et un schéma de type monophonique aux hautes fréquences (voir J. Benesty et al, « A Hybrid Mono/Stereo Acoustic Echo Canceler », IEEE Worshop on application of signal processing and acoustics (WASPAA'97)).

Dans le cas d'une analyse de corrélations en pleine bande, la technique hybride proposée permet d'adopter dynamiquement un schéma d'annulation d'écho approprié (mono ou stéréo). On peut ainsi s'affranchir des problèmes posés par les schémas stéréophoniques lorsque les signaux d'entrée sont corrélés (un schéma monophonique étant alors appliqué).

Suivant un autre aspect, l'invention propose ainsi un annuleur d'écho stéréophonique, dans lequel des premier et second signaux d'entrée sont appliqués à un système générateur d'écho, et un signal d'observation est obtenu en sortie dudit système, comprenant des moyens de traitement desdits signaux échantillonnés numériquement comportant:

- des moyens de filtrage stéréophonique de deux signaux respectivement obtenus à partir des premier et second signaux d'entrée ;
- des moyens de filtrage monophonique d'un signal obtenu à partir des premier et second signaux d'entrée ;
- des moyens pour obtenir un écho estimé des signaux d'entrée à partir des sorties des moyens de filtrage stéréophonique et monophonique ;
- des moyens pour soustraire l'écho estimé du signal d'observation et produire un signal d'erreur ;
- des moyens d'adaptation pour mettre à jour les moyens de filtrage stéréophonique et monophonique à partir des signaux d'entrée et du signal d'erreur ; et
- des moyens d'analyse de corrélations entre les premier et second signaux d'entrée, pour identifier des premières portions des deux signaux d'entrée dans lesquelles ils sont relativement décorrélés et des secondes portions des deux signaux d'entrée dans lesquelles ils sont plus corrélés que dans les premières portions, pour adresser aux moyens de filtrage stéréophonique deux signaux respectivement construits à partir des premières portions des deux signaux d'entrée, et pour adresser aux moyens de filtrage monophonique un signal construit à partir des secondes portions de l'un des deux signaux d'entrée.

Lesdites premières et secondes portions des signaux d'entrée s'entendent comme étant des portions temporelles et/ou des portions fréquentielles. Les moyens de filtrage stéréophonique et monophonique opèrent de préférence dans le domaine fréquentiel, mais ils peuvent aussi fonctionner dans le domaine temporel.

D'autres particularités et avantages de la présente invention apparaîtront dans la description ci-après d'exem-

**EP 1 052 838 A1**

ples de réalisation non limitatifs, en référence aux dessins annexés, dans lesquels :

- la figure 1 est un schéma synoptique d'un annuleur d'écho stéréophonique mettant en oeuvre l'invention ;
- la figure 2 est un schéma synoptique d'un module d'adaptation de l'annuleur d'écho de la figure 1 ; et
- la figure 3 est un schéma synoptique d'un annuleur d'écho hybride mono/stéréophonique mettant en oeuvre l'invention.

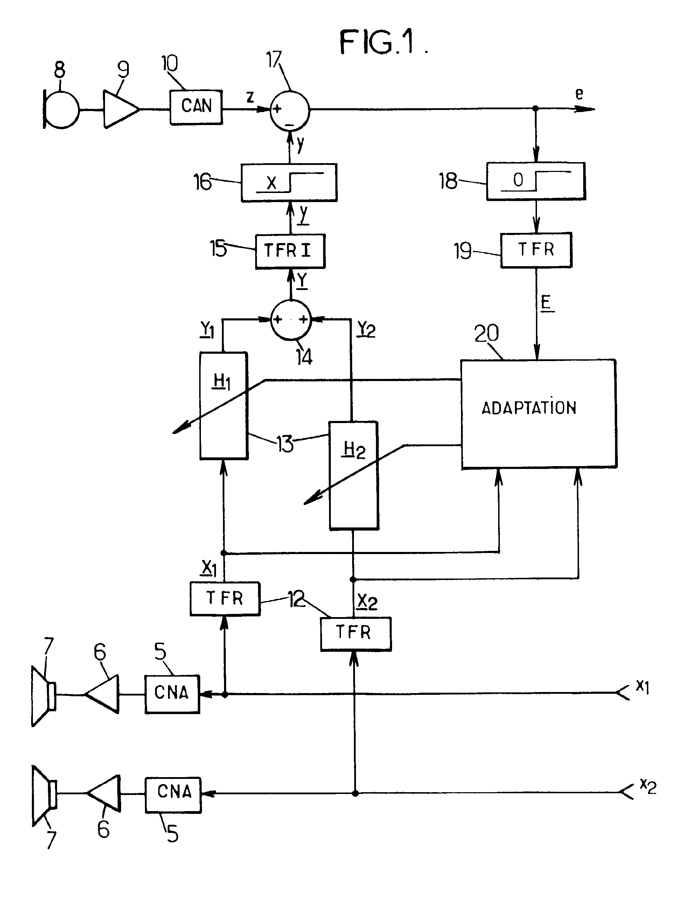

L'annuleur d'écho représenté sur la figure 1 équipe un système acoustique comportant deux voies de restitution sonore auxquelles sont respectivement appliqués deux signaux numériques d'entrée $x_1$, $x_2$. Pour chaque voie i (i = 1, 2), le signal $x_i$ est converti en analogique en 5 puis amplifié en 6 avant d'attaquer le haut-parleur 7.

Le système comporte en outre un ou plusieurs microphones 8 dont les signaux de sortie sont amplifiés en 9 et numérisés en 10 pour produire un ou plusieurs signaux numériques z appelés signaux d'observation.

L'annuleur d'écho sert à modifier un signal d'observation z pour en retirer des composantes d'écho des signaux d'entrée $x_1$, $x_2$, qui ont pu être générées du fait du couplage acoustique entre les haut-parleurs 7 et le microphone 8. Si le système comporte plusieurs voies de prise de son délivrant plusieurs signaux d'observation z, on pourra prévoir un annuleur d'écho sur chaque voie de prise de son.

Comme il est usuel, l'annuleur d'écho peut être réalisé en programmant un processeur de signal numérique (DSP) du commerce, ou en construisant un circuit intégré d'application spécifique (ASIC).

Dans l'exemple de réalisation décrit, l'annuleur d'écho utilise la méthode dite « overlap-and-save » (OLS) pour réaliser des opérations de convolution linéaire dans le domaine fréquentiel. Les filtres numériques modélisant les trajets d'écho étant supposés être des filtres à réponse impulsionnelle finie de N coefficients, respectivement $h_1$(1), ..., $h_1$(N) et $h_2$(1), ..., $h_2$(N), les signaux d'entrée $x_1$ et $x_2$ sont traités par blocs successifs de 2N échantillons. Pour une fréquence d'échantillonnage typique de $F_e$ = 8 kHz, le nombre N peut aller de quelques centaines à quelques milliers. Les blocs successifs de taille 2N des signaux d'entrée présentent des recouvrements mutuels de N échantillons ; le k-ième bloc du signal $\underline{x}_i$ (i = 1 ou 2), obtenu après réception de l'échantillon $x_i$(n) de rang n = k×N, a pour expression :

$$\underline{x}_i = \underline{x}_i(k) = [x_i(n-2N+1), ..., x_i(n-N), x_i(n-N+1), ..., x_i(n-1), x_i(n)]^T$$

Dans les notations utilisées ici :

- les signaux indiqués par une lettre minuscule représentent des signaux réels du domaine temporel ;
- les signaux indiqués par une lettre majuscule représentent des signaux complexes du domaine fréquentiel ;
- l'index k entre parenthèses, le plus souvent implicite, désigne l'index du bloc courant de taille 2N ;
- les notations soulignées représentent des vecteurs colonne de taille 2N ;
- les notations soulignées deux fois représentent des matrices carrées de taille 2N x 2N.

On observera que, de façon connue en soi, le recouvrement entre les blocs de 2N échantillons pourrait être de plus de N échantillons. Ceci permet d'augmenter la fréquence d'adaptation des filtres et de diminuer le retard causé pour le traitement d'un bloc, au prix d'une augmentation de la complexité.

Deux modules de transformation de Fourier rapide 12 transforment vers le domaine fréquentiel les blocs des signaux d'entrée $x_1$ et $x_2$. En variante, l'annuleur d'écho pourrait utiliser d'autres transformations de domaines (transformée en cosinus discrets, transformée de Hartley rapide, ... ). En notant $\underline{\underline{W}}$ la matrice de la transformée de Fourier rapide de taille 2N, les modules 12 produisent, pour i = 1 ou 2, des vecteurs donnés par :

$$\underline{X}_i = \underline{X}_i(k) = \underline{\underline{W}}.\underline{x}_i = [X_i(0), X_i(1), ..., X_i(2N-1)]^T = [X_i(0,k), X_i(1,k), ..., X_i(2N-1,k)]^T$$

Les filtres 13 réalisent les convolutions dans le domaine fréquentiel, en multipliant terme à terme chaque vecteur $\underline{X}_i$ par un vecteur correspondant $\underline{H}_i$ de 2N coefficients complexes, égal à :

$$\underline{H}_i = \underline{H}_i(k) = \underline{\underline{W}}.[h_i(1), h_i(2), ..., h_i(N), 0, ..., 0]^T$$

Les vecteurs résultants $\underline{Y}_i = \underline{Y}_i(k) = \underline{X}_i \otimes \underline{H}_i$ sont sommés en 14 pour obtenir un vecteur $\underline{Y}$ de 2N composantes spectrales d'écho total estimé.

Ce vecteur $\underline{Y}$ fait l'objet d'une transformée de Fourier inverse par le module 15 qui restitue un bloc $\underline{y} = \underline{\underline{W}}^{-1}$.

$\underline{Y}$ de 2N échantillons temporels. Les N premiers échantillons du bloc $\underline{y}$ sont écartés par le module 16 qui ne conserve que les N derniers échantillons y(n-N+1), ..., y(n-1), y(n). Un soustracteur 17 soustrait ces N échantillons de l'écho total estimé y des échantillons correspondants du signal d'observation z. Le résultat est un signal d'erreur e formant le signal de sortie de l'annuleur d'écho, après d'éventuelles opérations supplémentaires de mise en forme.

Conformément à la technique OLS, les N échantillons e(n-N+1), ..., e(n-1), e(n) du signal d'erreur e délivrés par le soustracteur 17 lors du traitement du bloc k sont convertis en un bloc de taille 2N par un module 18 qui place N zéros en début de bloc. Le module 19 procède alors à une transformée de Fourier rapide du bloc du signal d'erreur, pour produire un vecteur :

$$\underline{E} = \underline{E}(k) = \underline{W}.[0, ..., 0, e(n-N+1), ..., e(n-1), e(n)]^T$$

Le vecteur E, ainsi que les vecteurs $\underline{X}_1$ et $\underline{X}_2$ relatifs au bloc courant sont fournis à un module d'adaptation 20 qui met à jour les coefficients des filtres, représentés par les composantes complexes des vecteurs $\underline{H}_1$ et $\underline{H}_2$, pour le traitement du bloc suivant k+1.

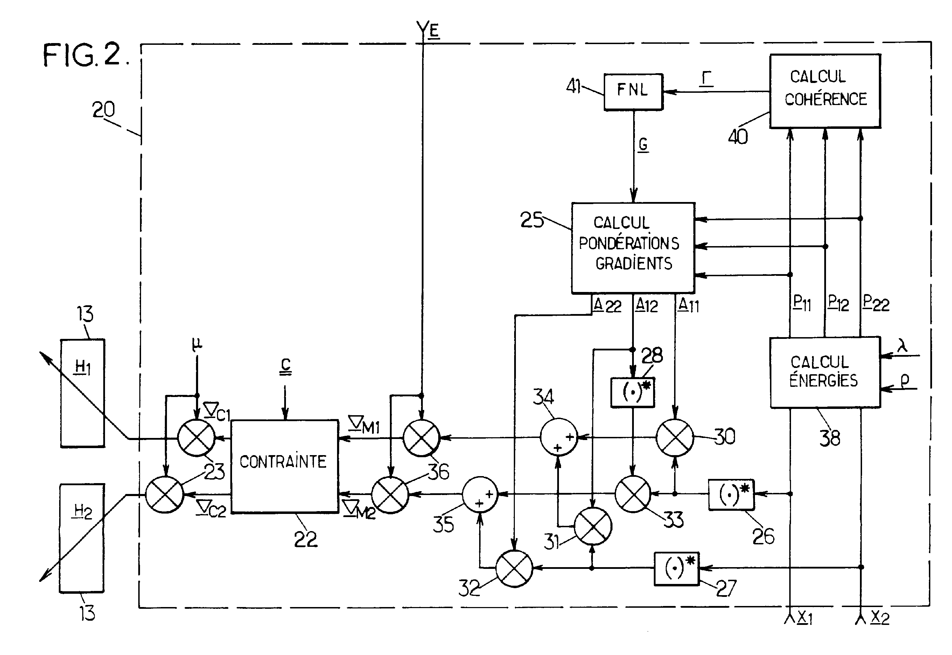

Une forme de réalisation possible du module d'adaptation 20 dans un annuleur d'écho selon l'invention est illustrée par la figure 2. Des gradients modifiés $\nabla_{M1}$ et $\nabla_{M2}$ sont calculés pour les deux filtres 13 conformément aux relations (1) et (2). Dans l'exemple considéré, chacun de ces gradients modifiés est contraint par un module 22, pour tenir compte du fait que les 2N coefficients du vecteur $\underline{H}_i$ ne représentent que N coefficients de la réponse impulsionnelle. La contrainte consiste à multiplier le vecteur $\nabla_{Mi}$ par la matrice de projection $\underline{C} = \underline{W}.\underline{J}.\underline{W}^{-1}$, où $\underline{J}$ est la matrice diagonale 2N×2N dont les N termes diagonaux supérieurs sont des 1 et dont les N termes diagonaux supérieurs sont des 0.

Des multiplieurs 23 multiplient les gradients contraints $\nabla_{Ci} = \underline{C}.\nabla_{Mi}$ par le pas d'adaptation $\mu$, et délivrent les termes correctifs des coefficients de filtrage : $\underline{H}_i(k+1) = \underline{H}_i(k) + \mu.\nabla_{Ci}$.

Le module d'adaptation 20 tient compte (relations (1) et (2)) de vecteurs $\underline{A}_{11}$, $\underline{A}_{12}$, $\underline{A}_{22}$ de pondération des gradients déterminés par une unité 25. Il comprend des unités 26-28 qui produisent les complexes conjugués des vecteurs $\underline{X}_1$, $\underline{X}_2$ et $\underline{A}_{12}$, et des circuits multiplieurs 30-33 qui effectuent respectivement les produits terme à terme $\underline{X}_1^* \otimes \underline{A}_{11}$, $\underline{X}_2^* \otimes \underline{A}_{12}$, $\underline{X}_2^* \otimes \underline{A}_{22}$ et $\underline{X}_1^* \otimes \underline{A}_{12}^*$. Les sorties des circuits multiplieurs 30 et 31 sont sommées en 34, et les sorties des circuits multiplieurs 32 et 33 sont sommées en 35. Les composantes des vecteurs produits par les additionneurs 34 et 35 sont multipliées terme à terme par celles du vecteur $\underline{E}$ par des circuits multiplieurs 36 qui délivrent respectivement les gradients modifiés $\nabla_{M1}$ et $\nabla_{M2}$.

Pour obtenir les pondérations des gradients, la première étape est l'évaluation, à l'instant courant, des énergies spectrales $P_{11}(f)$, $P_{22}(f)$ et interspectrale $P_{12}(f)$ des signaux d'entrée $x_1$ et $x_2$. Cette opération est effectuée par une unité 38, par moyennage sur une fenêtre de signal des quantités $|X_1(f)|^2 = X_1(f).X_1(f)^*$, $|X_2(f)|^2 = X_2(f).X_2(f)^*$ et $\rho.X_1(f).X_2(f)^*$. Il peut s'agir de moyennes arithmétiques sur une fenêtre rectangulaire glissante. Dans l'exemple illustré, ce sont des moyennes par lissage exponentiel faisant intervenir un facteur d'oubli $\lambda$ compris entre 0 et 1 :

$$P_{11}(f,k) = \lambda. P_{11}(f,k-1) + (1-\lambda). X_1(f,k).X_1(f,k)^* \qquad (3)$$

$$P_{22}(f,k) = \lambda. P_{22}(f,k-1) + (1-\lambda). X_2(f,k).X_2(f,k)^* \qquad (4)$$

$$P_{12}(f,k) = \lambda. P_{11}(f,k-1) + \rho.(1-\lambda). X_1(f,k).X_2(f,k)^* \qquad (5)$$

On note dans la relation (5) que l'unité 38 tient compte d'un coefficient supplémentaire $\rho$ tel que $0<\rho\leq1$. Ce coefficient permet de régler le degré de prise en compte des termes croisés dans l'adaptation des filtres 13.

Une unité 40 reçoit les énergies $P_{11}(f)$, $P_{22}(f)$ et $P_{12}(f)$ évaluées par l'unité 38 pour chacune des 2N fréquences de la transformée de Fourier, et estime la fonction de cohérence $\Gamma(f)$ entre les deux signaux d'entrée. Cette estimation peut consister à prendre pour chaque fréquence f, c'est-à-dire à la résolution de la transformée dans le domaine fréquentiel :

$$\Gamma(f) = \frac{|P_{12}(f)|^2}{P_{11}(f).P_{22}(f)} \qquad (6)$$

L'unité 40 peut encore tenir compte d'une subdivision du spectre en sous-bandes, et prendre comme valeur de cohérence $\Gamma(f)$ pour chaque fréquence d'une sous-bande une moyenne sur la sous-bande de la fonction de cohérence calculée selon la relation (6). Cette division en sous-bande peut être uniforme. Mais elle sera avantageusement non-uniforme, par exemple selon une échelle de type Mel ou Bark.

Les 2N valeurs de cohérence $\Gamma(f)$ produites par l'unité 40 sont adressées à une unité 41 qui leur applique une fonction non-linéaire pour obtenir des grandeurs $G(f)$.

Pour éviter les variations trop brusques des filtres, on borne la fonction $G(f)$ pour qu'elle prenne ses valeurs entre 0 et $G_{max}$, avec $0<G_{max}<1$. En outre, la fonction $G(f)$ est avantageusement telle que $G(f)=0$ quand $\Gamma(f)<\Gamma_{min}$, avec $0<\Gamma_{min}<1$, afin qu'une adaptation classique soit effectuée dans le cas de signaux faiblement corrélés. Une forme possible est une fonction linéaire par morceaux: $G(f) = 0$ si $\Gamma(f) < \Gamma_{min}$ ; $G(f) = G_{max}$ si $\Gamma(f) > \Gamma_{max}$, avec $\Gamma_{min} < \Gamma_{max} < 1$ ; et $G(f) = Gm_{ax}\frac{\Gamma(f)-\Gamma_{min}}{\Gamma_{max}-\Gamma_{min}}$ si $\Gamma_{min} < \Gamma(f) < \Gamma_{max}$.

A partir des quantités $G(f)$, $P_{11}(f)$, $P_{22}(f)$ et $P_{12}(f)$, l'unité 25 calcule les vecteurs $\underline{A}_{11}$, $\underline{A}_{12}$, $\underline{A}_{22}$ de pondération des gradients utilisés dans les relations (1)et(2):

$$\underline{A}_{11}(f) = \frac{1}{P_{11}(f).\left(1-G(f)\right)} \qquad (7)$$

$$\underline{A}_{12}(f) = \frac{-G(f)}{P_{12}(f).\left(1-G(f)\right)} \qquad (8)$$

$$\underline{A}_{22}(f) = \frac{1}{P_{22}(f).\left(1-G(f)\right)} \qquad (9)$$

Les relations (1) et (2), permettant une mise en oeuvre relativement simple de l'adaptation des filtres stéréophoniques, peuvent se déduire par approximation d'une expression plus générale des équations d'adaptation, dérivée d'un algorithme de type « bloc Newton »:

$$\underline{H}_1(k+1) = \underline{H}_1(k) + \mu.\underline{\underline{C}}.[\underline{\underline{U}}_{11}.\underline{\nabla}_1 + \underline{\underline{U}}_{12}.\underline{\nabla}_2] \qquad (10)$$

$$\underline{H}_2(k+1) = \underline{H}_2(k) + \mu.\underline{\underline{C}}.[\underline{\underline{U}}_{22}.\underline{\nabla}_2 + \underline{\underline{U}}_{21}.\underline{\nabla}_1] \qquad (11)$$

Dans cette expression (10)-(11), les matrices $\underline{\underline{U}}_{ij}$ sont :

$$\underline{\underline{U}}_{11} = \left( \underline{\underline{R}}'_{11} - \underline{\underline{R}}'_{12}\left(\underline{\underline{R}}'_{22}\right)^{-1}\underline{\underline{R}}'_{21} \right)^{-1}$$

$$\underline{\underline{U}}_{12} = - \underline{\underline{R}}'_{12}\left(\underline{\underline{R}}'_{22}\right)^{-1}\underline{\underline{U}}_{11}$$

$$\underline{\underline{U}}_{22} = \left( \underline{\underline{R}}'_{22} - \underline{\underline{R}}'_{21}\left(\underline{\underline{R}}'_{11}\right)^{-1}\underline{\underline{R}}'_{12} \right)^{-1}$$

$$\underline{\underline{U}}_{21} = -\underline{\underline{R}}'_{21}\left(\underline{\underline{R}}'_{11}\right)^{-1}\underline{\underline{U}}_{22}$$

les $\underline{\underline{R}}'_{ij}$ étant des matrices de corrélation de taille 2N×2N exprimées dans le domaine fréquentiel: $\underline{\underline{R}}'_{ij} = \underline{\underline{W}}.\underline{\underline{R}}_{ij}.\underline{\underline{W}}^{-1}$, avec $\underline{\underline{R}}_{ij}$ égale à la matrice de corrélation de taille 2Nx2N des signaux d'entrée $x_i$ et $x_j$.

L'approximation faisant passer de l'expression (10)-(11) aux relations (1)-(2) revient à faire les hypothèses: (i) que chaque signal d'entrée est parfaitement décorrélé par la transformée de Fourier ; et (ii) que les deux signaux d'entrée sont mutuellement décorrélés à des fréquences différentes. Les termes croisés, dus à la présence de l'énergie interspectrale $P_{12}(f)$ dans les relations (6) et (8), restent pour rendre compte de la corrélation que peuvent avoir les signaux d'entrée à une même fréquence. Sous ces deux hypothèses, les matrices $\underline{U}_{11}$, $\underline{U}_{12}$, $\underline{U}_{22}$ et $\underline{U}_{21}$ peuvent être approchées par des matrices diagonales dont les termes diagonaux sont ceux des vecteurs $\underline{A}_{11}$, $\underline{A}_{12}$, $\underline{A}_{22}$ et $\underline{A}_{12}^*$, respectivement.

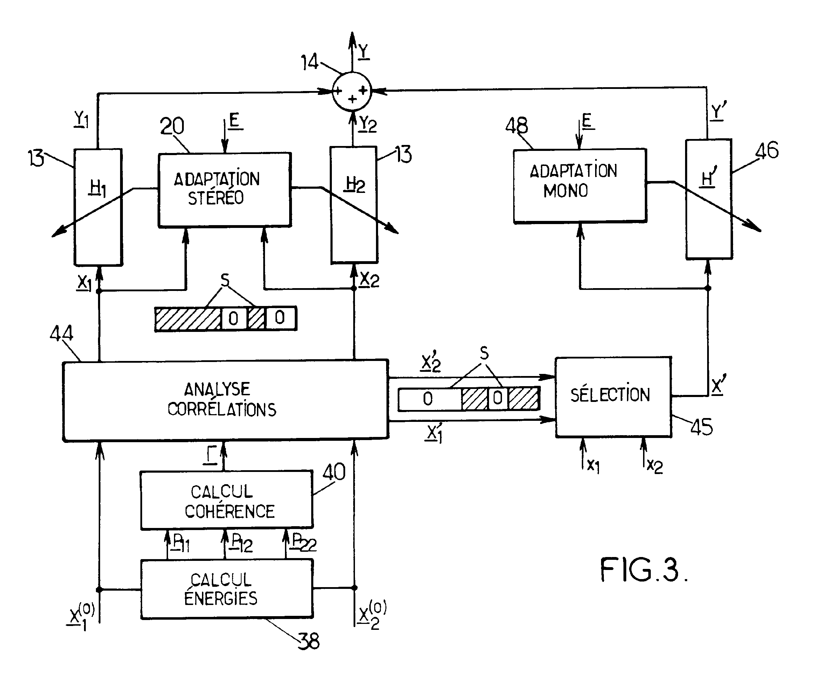

Dans l'exemple de réalisation représenté sur la figure 3, les vecteurs de composantes spectrales $\underline{X}_1^{(0)}$ et $X_2^{(0)}$ produits par les modules de TFR 12 sont adressés à un module 44 d'analyse des corrélations entre les signaux d'entrée. Ce module 44 détermine un sous-ensemble S de fréquences f auxquelles les signaux $x_1$ et $x_2$ sont plutôt décorrélés. Les composantes spectrales correspondantes sont respectivement placées dans les vecteurs $\underline{X}_1$ et $\underline{X}_2$ fournis aux filtres stéréophoniques 13 et à leur module d'adaptation 20, qui fonctionnent comme dans l'exemple précédemment décrit en référence aux figures 1 et 2. Pour celles des 2N fréquences de la TFR qui n'appartiennent pas au sous-ensemble S, les composantes des vecteurs $\underline{X}_1$ et $\underline{X}_2$ fournis aux filtres 13 et au module d'adaptation 20 sont mises à zéro.

Le module 44 place les composantes spectrales des signaux $x_1$ et $x_2$ relatives aux fréquences auxquelles les signaux d'entrée sont plutôt corrélés dans des vecteurs $\underline{X}_1'$ et $\underline{X}_2'$, dont les composantes relatives aux fréquences du sous-ensemble S sont à zéro. Un module 45 sélectionne un vecteur $\underline{X}'$ parmi ces deux vecteurs $\underline{X}_1'$ et $\underline{X}_2'$, et le fournit à un filtre monophonique 46.

Le vecteur de sortie $\underline{Y}' = \underline{H}' \otimes \underline{X}'$ du filtre monophonique 46 est ajouté aux vecteurs de sortie $\underline{Y}_1 = \underline{H}_1 \otimes \underline{X}_1$ et $\underline{Y}_2 = \underline{H}_2 \otimes \underline{X}_2$ des filtres stéréo 13 par l'additionneur 14. Le vecteur $\underline{Y} = \underline{Y}_1 + \underline{Y}_2 + \underline{Y}'$ qui en résulte est ensuite traité comme dans l'exemple précédent.

Un module d'adaptation monophonique 48 se charge de la mise à jour du filtre 46 à l'issue du traitement de chaque bloc, par exemple selon l'algorithme FDAF :

$$\underline{H}'(k+1) = \underline{H}'(k) + \mu . \underline{C} . \underline{\nabla}'$$

avec $\nabla'(f) = E(f).X'(f)^*/<X'(f).X'(f)^*>$.

Une façon commode d'analyser les corrélations entre les signaux d'entrée consiste, pour le module 44, à se fonder sur les valeurs de cohérence $\Gamma(f)$ calculées par les unités 38 et 40 pour chacune des fréquences f de la TFR. En conséquence, dans le schéma de la figure 3, il faut comprendre que le module d'adaptation stéréo 20 ne recalcule pas les énergies $P_{11}(f)$, $P_{22}(f)$ et $P_{12}(f)$ et les valeurs de cohérence $\Gamma(f)$ (voir figure 2), mais qu'il les reçoit des unités 38 et 40 fonctionnant en amont du module d'analyse 44.

Le module 44 peut notamment utiliser un seuil T(f), constant ou dépendant de la fréquence, pour décider que si $\Gamma(f) > T(f)$, les signaux d'entrée sont corrélés à la fréquence f de sorte que les composantes $X_1^{(0)}(f)$ et $X_2^{(0)}(f)$ sont fournies au module de sélection 45, et que sinon les signaux d'entrée sont décorrélés à la fréquence f de sorte que les composantes $X_1^{(0)}(f)$ et $X_2^{(0)}(f)$ sont fournies aux filtres stéréo 13.

L'analyse de corrélations par le module 44 peut être effectuée pour chaque fréquence f de la TFR.

Elle peut également être effectuée à la résolution d'une subdivision en sous-bandes de la bande de fréquences du signal : la valeur de cohérence $\Gamma(f)$ (ou une autre mesure de corrélation) est intégrée dans chaque sous-bande, et les composantes spectrales relatives à toutes les fréquences de cette sous-bande sont adressées aux filtres stéréo 13 ou au module de sélection pour le filtre mono 46 en fonction de la valeur intégrée obtenue.

L'analyse de corrélations peut encore être effectuée en pleine bande : les vecteurs $\underline{X}_1^{(0)}$ et $\underline{X}_2^{(0)}$ sont fournis globalement soit au module de sélection 45 soit aux filtres stéréo 13 selon que les signaux d'entrée paraissent plus ou moins corrélés.

Pour vérifier l'hypothèse de causalité du système, le vecteur $\underline{X}'$ sélectionné par le module 45 est celui des vecteurs $\underline{X}_1'$ et $\underline{X}_2'$ qui correspond au signal d'entrée en avance par rapport à l'autre. Une possibilité parmi d'autres pour procéder à cette sélection consiste à examiner les corrélations temporelles entre les signaux $x_1$ et $x_2$ sur une fenêtre glissante de L échantillons: on calcule d'abord, pour $-d \le \delta \le d$, les corrélations

$$corr(\delta) = \sum_{t=0}^{L-1} x_1(n-t).x_2(n-t+\delta) \; ;$$

on détermine le nombre $\Delta$ compris entre -d et d qui maximise $corr(\delta)$ ; et on sélectionne le vecteur $\underline{X}_1'$ si $\Delta > 0$ et le vecteur $\underline{X}_2'$ si $\Delta \le 0$.

Le module 45 peut procéder à la sélection au rythme des blocs de taille 2N, ou avec une périodicité plus grande.

Lorsque pour une fréquence donnée f, on passe d'une situation où les signaux d'entrée $x_1$, $x_2$ sont jugés décorrélés (stéréo) à une situation où ils sont jugés corrélés (mono), le filtre 46 peut être initialisé, en ce qui concerne cette fréquence f, par la somme du filtre stéréo correspondant à la voie en avance et du filtre stéréo correspondant à la voie en retard, remis en phase. Avec le mode de sélection décrit ci-dessus, ceci conduit à prendre, au moment d'une telle transition: $H'(f) = H_1(f) + H_2(f).\exp(-2j\pi\Delta f/F_e)$ si $\Delta > 0$, et $H'(f) = H_1(f).\exp(2j\pi\Delta f/F_e) + H_2(f)$ si $\Delta \leq 0$.

Pour une transition dans l'autre sens (mono → stéréo), on ne peut pas récupérer le filtre monophonique qui vient d'être identifié. Il y a plusieurs possibilités pour la réinitialisation des filtres stéréo 13: remise à zéro des coefficients $H_1(f)$ et $H_2(f)$, ou conservation des derniers coefficients $H_1(f)$ et $H_2(f)$ mis à jour avant le passage en filtrage monophonique. Cette dernière possibilité est celle adoptée dans l'exemple précédemment décrit puisque le module 20 adapte les filtres stéréo sur la base des gradients $\bigtriangledown_{M1}$ et $\bigtriangledown_{M2}$ des relations (1) et (2), dont les composantes sont nulles comme celles des vecteurs $\underline{X}_1$ et $\underline{X}_2$ pour les fréquences f n'appartenant pas au sous-ensemble S.

**Revendications**

1. Procédé d'annulation d'écho stéréophonique, dans lequel on applique des premier et second signaux d'entrée ($x_1$, $x_2$) à un système générateur d'écho, et on recueille un signal d'observation (z) en sortie dudit système, les signaux d'entrée étant échantillonnés numériquement et traités par blocs successifs de 2N échantillons avec passage dans le domaine fréquentiel selon un ensemble de 2N fréquences, dans lequel le traitement d'un bloc de 2N échantillons comporte les étapes suivantes :

   - transformer le premier signal d'entrée du domaine temporel vers le domaine fréquentiel pour obtenir un vecteur $\underline{X}_1$ ayant 2N composantes complexes relatives à l'ensemble de 2N fréquences, incluant des composantes spectrales du premier signal d'entrée relatives à un sous-ensemble de l'ensemble de 2N fréquences ;
   - transformer le second signal d'entrée du domaine temporel vers le domaine fréquentiel pour obtenir un vecteur $\underline{X}_2$ ayant 2N composantes complexes relatives à l'ensemble de 2N fréquences, incluant des composantes spectrales du second signal d'entrée relatives audit sous-ensemble de fréquences ;
   - multiplier terme à terme le vecteur $\underline{X}_1$ par un vecteur $\underline{H}_1$ de 2N coefficients complexes pour produire des premières composantes spectrales d'écho estimé ($Y_1(f)$) relatives aux fréquences du sous-ensemble;
   - multiplier terme à terme le vecteur $\underline{X}_2$ par un vecteur $\underline{H}_2$ de 2N coefficients complexes pour produire des secondes composantes spectrales d'écho estimé ($Y_2(f)$) relatives aux fréquences du sous-ensemble;
   - additionner les première et seconde composantes spectrales d'écho estimé relatives à chaque fréquence du sous-ensemble pour obtenir une composante spectrale appartenant à un vecteur ($\underline{Y}$) de 2N composantes spectrales d'écho total estimé ;
   - transformer le vecteur de 2N composantes spectrales d'écho total estimé du domaine fréquentiel vers le domaine temporel pour obtenir un écho total estimé (y) ;
   - soustraire l'écho total estimé du signal d'observation pour produire un signal d'erreur (e) ;
   - transformer le signal d'erreur du domaine temporel vers le domaine fréquentiel pour obtenir un vecteur $\underline{E}$ de 2N composantes spectrales du signal d'erreur relatives à l'ensemble de 2N fréquences ; et
   - mettre à jour les vecteurs $\underline{H}_1$ et $\underline{H}_2$ pour le traitement du bloc suivant, à partir des vecteurs $\underline{X}_1$, $\underline{X}_2$ et $\underline{E}$,

   caractérisé en ce qu'on calcule une énergie spectrale $P_{11}(f)$ du premier signal d'entrée, une énergie spectrale $P_{22}(f)$ du second signal d'entrée, une énergie interspectrale $P_{12}(f)$ des premier et second signaux d'entrée et une valeur de cohérence $\Gamma(f)$, pour chacune des fréquences f de l'ensemble de 2N fréquences, en ce que la mise à jour du vecteur $\underline{H}_1$ pour le traitement du bloc suivant est effectuée sur la base d'un gradient modifié ($\bigtriangledown_{M1}$) de la forme $(\underline{A}_{11} \otimes \underline{X}_1^* + \underline{A}_{12} \otimes \underline{X}_2^*) \otimes \underline{E}$, où $\otimes$ désigne le produit de deux vecteurs terme à terme, $(.)^*$ désigne le complexe conjugué, $\underline{A}_{11}$ désigne un vecteur de taille 2N dont la composante relative à la fréquence f est $\frac{1}{P_{11}(f).(1-G(f))}$, et $\underline{A}_{12}$ désigne un vecteur de taille 2N dont la composante relative à la fréquence f est $\frac{-G(f)}{P_{12}(f).(1-G(f))}$, G(f) étant une fonction réelle croissante de la valeur de cohérence $\Gamma(f)$, telle que $0 \leq G(f) < 1$, et en ce que la mise à jour du vecteur $\underline{H}_2$ pour le traitement du bloc suivant est effectuée sur la base d'un gradient modifié ($\bigtriangledown_{M2}$) de la forme $(\underline{A}_{22} \otimes \underline{X}_2^* + \underline{A}_{12}^* \otimes \underline{X}_1^*) \otimes \underline{E}$, où $\underline{A}_{22}$ désigne un vecteur de taille 2N dont la composante relative à la fréquence f est $\frac{1}{P_{22}(f).(1-G(f))}$.

2. Procédé selon la revendication 1, dans lequel la valeur de cohérence $\Gamma(f)$ calculée est de la forme $\Gamma(f) = \frac{|P_{12}(f)|^2}{P_{11}(f).P_{22}(f)}$.

3. Procédé selon la revendication 1 ou 2, dans lequel la valeur de cohérence $\Gamma(f)$ calculée est intégrée par sous-bandes, selon une subdivision en sous-bandes de l'ensemble de 2N fréquences.

**4.** Procédé selon la revendication 3, dans lequel la subdivision en sous-bandes est non uniforme dans l'ensemble de 2N fréquences.

**5.** Procédé selon l'une quelconque des revendications précédentes, dans lequel les énergies spectrales $P_{11}(f)$ et $P_{22}(f)$ sont respectivement des moyennes de $|X_1(f)|^2$ et $|X_2(f)|^2$, et l'énergie interspectrale $P_{12}(f)$ est une moyenne de $\rho . X_1(f) . X_2(f)^*$, où $X_1(f)$ et $X_2(f)$ représentent respectivement les composantes des vecteurs $\underline{X}_1$ et $\underline{X}_2$ relatives à la fréquence f, $\rho$ et est un coefficient réel tel que $0 < \rho \leq 1$.

**6.** Procédé selon l'une quelconque des revendications précédentes, dans lequel la fonction G(f) prend ses valeurs entre 0 et $G_{max}$, avec $0 < G_{max} < 1$.

**7.** Procédé selon l'une quelconque des revendications précédentes, dans lequel la fonction G(f) est telle que G(f) = 0 quand $\Gamma(f) < \Gamma_{min}$, avec $0 < \Gamma_{min} < 1$.

**8.** Procédé selon les revendications 6 et 7, dans lequel la fonction G(f) est telle que $G(f) = G_{max}$ quand $\Gamma(f) > \Gamma_{max}$, avec $\Gamma_{min} < \Gamma_{max} < 1$, et que $G(f) = G_{max} \frac{\Gamma(f) - \Gamma_{min}}{\Gamma_{max} - \Gamma_{min}}$ quand $\Gamma_{min} < \Gamma(f) < \Gamma_{max}$.

**9.** Procédé selon l'une quelconque des revendications précédentes, dans lequel ledit sous-ensemble de fréquences représente la totalité de l'ensemble de 2N fréquences.

**10.** Procédé selon l'une quelconque des revendications 1 à 8, dans lequel ledit sous-ensemble de fréquences (S) est composé de fréquences pour lesquelles les premier et second signaux d'entrée ($x_1$, $x_2$) vérifient un critère de corrélation.

**11.** Procédé selon la revendication 10, dans lequel le critère de corrélation est évalué au moyen de la valeur de cohérence ($\Gamma(f)$) calculée pour chacune des fréquences de l'ensemble de 2N fréquences.

**12.** Procédé selon la revendication 10 ou 11, dans lequel les composantes des vecteurs $\underline{X}_1$ et $\underline{X}_2$ relatives aux fréquences de l'ensemble de 2N fréquences n'appartenant pas audit sous-ensemble (S) sont nulles, dans lequel on forme des vecteurs $\underline{X}_1'$ et $\underline{X}_2'$ de 2N composantes complexes nulles pour les fréquences dudit sous-ensemble, et respectivement égales aux composantes spectrales des premier et second signaux d'entrée pour les fréquences de l'ensemble de 2N fréquences n'appartenant pas audit sous-ensemble, on sélectionne l'un des vecteurs $\underline{X}_1'$ et $\underline{X}_2'$, qu'on multiplie terme à terme par un vecteur $\underline{H}'$ pour obtenir des composantes spectrales d'écho monophonique estimé pour les fréquences de l'ensemble de 2N fréquences n'appartenant pas audit sous-ensemble, et on complète le vecteur de 2N composantes spectrales d'écho total estimé avec lesdites composantes spectrales d'écho monophonique estimé.

**13.** Procédé selon la revendication 12, dans lequel le vecteur $\underline{H}'$ est mis à jour sur la base d'un terme de gradient ($\bigtriangledown'$) proportionnel au produit terme à terme du vecteur $\underline{E}$ et du vecteur $\underline{X}_1'$ ou $\underline{X}_2'$ sélectionné.

**14.** Procédé selon la revendication 12 ou 13, dans lequel le vecteur $\underline{X}_1'$ ou $\underline{X}_2'$ sélectionné est celui qui présente une avance temporelle par rapport à l'autre.

**15.** Annuleur d'écho stéréophonique, dans lequel des premier et second signaux d'entrée ($x_1$, $x_2$) sont appliqués à un système générateur d'écho, et un signal d'observation (z) est obtenu en sortie dudit système, comprenant des moyens de traitement desdits signaux échantillonnés numériquement, agencés pour traiter les signaux d'entrée par blocs successifs de 2N échantillons avec passage dans le domaine fréquentiel selon un ensemble de 2N fréquences, les moyens de traitement comportant:

- des moyens (12) pour transformer un bloc du premier signal d'entrée du domaine temporel vers le domaine fréquentiel pour obtenir un vecteur $\underline{X}_1$ ayant 2N composantes complexes relatives à l'ensemble de 2N fréquences, incluant des composantes spectrales du premier signal d'entrée relatives à un sous-ensemble de l'ensemble de 2N fréquences ;
- des moyens (12) pour transformer un bloc correspondant du second signal d'entrée du domaine temporel vers le domaine fréquentiel pour obtenir un vecteur $\underline{X}_2$ ayant 2N composantes complexes relatives à l'ensemble de 2N fréquences, incluant des composantes spectrales du second signal d'entrée relatives audit sous-ensemble de fréquences ;
- des moyens (13) pour multiplier terme à terme le vecteur $\underline{X}_1$ par un vecteur $\underline{H}_1$ de 2N coefficients complexes pour produire des premières composantes spectrales d'écho estimé relatives aux fréquences du sous-ensemble ;

- des moyens (13) pour multiplier terme à terme le vecteur $\underline{X}_2$ par un vecteur $\underline{H}_2$ de 2N coefficients complexes pour produire des secondes composantes spectrales d'écho estimé relatives aux fréquences du sous-ensemble ;
- des moyens (14) pour additionner les première et seconde composantes spectrales d'écho estimé relatives à chaque fréquence du sous-ensemble pour obtenir une composante spectrale appartenant à un vecteur ($\underline{Y}$) de 2N composantes spectrales d'écho total estimé ;
- des moyens (15, 16) pour transformer le vecteur de 2N composantes spectrales d'écho total estimé du domaine fréquentiel vers le domaine temporel pour obtenir un écho total estimé (y) ;
- des moyens (17) pour soustraire l'écho total estimé du signal d'observation pour produire un signal d'erreur (e) ;
- des moyens (18, 19) pour transformer le signal d'erreur du domaine temporel vers le domaine fréquentiel pour obtenir un vecteur $\underline{E}$ de 2N composantes spectrales du signal d'erreur relatives à l'ensemble de 2N fréquences ; et
- des moyens d'adaptation (20) pour mettre à jour les vecteurs $\underline{H}_1$ et $\underline{H}_2$ pour le traitement du bloc suivant, à partir des vecteurs $\underline{X}_1$, $\underline{X}_2$ et $\underline{E}$,

caractérisé par des moyens (38, 40) de calcul d'une énergie spectrale $P_{11}(f)$ du premier signal d'entrée, d'une énergie spectrale $P_{22}(f)$ du second signal d'entrée, d'une énergie interspectrale $P_{12}(f)$ des premier et second signaux d'entrée et d'une valeur de cohérence $\Gamma(f)$, pour chacune des fréquences f de l'ensemble de 2N fréquences, en ce que la mise à jour du vecteur $\underline{H}_1$ pour le traitement du bloc suivant est effectuée sur la base d'un gradient modifié ($\underline{\nabla}_{M1}$) de la forme $(\underline{A}_{11} \otimes \underline{X}_1^* + \underline{A}_{12} \otimes \underline{X}_2^*) \otimes \underline{E}$, où $\otimes$ désigne le produit de deux vecteurs terme à terme, $(.)^*$ désigne le complexe conjugué, $\underline{A}_{11}$ désigne un vecteur de taille 2N dont la composante relative à la fréquence f est $\frac{1}{P_{11}(f).(1-G(f))}$, et $\underline{A}_{12}$ désigne un vecteur de taille 2N dont la composante relative à la fréquence f est $\frac{-G(f)}{P_{12}(f).(1-G(f))}$, G(f) étant une fonction réelle croissante de la valeur de cohérence $\Gamma(f)$, telle que $0 \le G(f) < 1$, et en ce que la mise à jour du vecteur $\underline{H}_2$ pour le traitement du bloc suivant est effectuée sur la base d'un gradient modifié ($\underline{\nabla}_{M2}$) de la forme $(\underline{A}_{22} \otimes \underline{X}_2^* + \underline{A}_{12}^* \otimes \underline{X}_1^*) \otimes \underline{E}$, où $\underline{A}_{22}$ désigne un vecteur de taille 2N dont la composante relative à la fréquence f est $\frac{1}{P_{22}(f).(1-G(f))}$.

**16.** Annuleur d'écho stéréophonique selon la revendication 15, dans lequel la fonction G(f) est un fonction non-linéaire de la valeur de cohérence $\Gamma(f)$.

**17.** Annuleur d'écho stéréophonique selon la revendication 15 ou 16, dans lequel ledit sous-ensemble de fréquences (S) est composé de fréquences pour lesquelles les premier et second signaux d'entrée ($x_1$, $x_2$) vérifient un critère de corrélation, et dans lequel les fréquences de l'ensemble de 2N fréquences n'appartenant pas audit sous-ensemble font l'objet d'un filtrage monophonique pour estimer des composantes spectrales d'écho monophonique qui complètent le vecteur de 2N composantes spectrales d'écho total estimé.

**18.** Annuleur d'écho stéréophonique selon la revendication 17, comprenant des moyens (44) pour évaluer le critère de corrélation sur la base de la valeur de cohérence ($\Gamma(f)$) calculée pour chacune des fréquences de l'ensemble de 2N fréquences.

**19.** Annuleur d'écho stéréophonique, dans lequel des premier et second signaux d'entrée ($x_1$, $x_2$) sont appliqués à un système générateur d'écho, et un signal d'observation (z) est obtenu en sortie dudit système, comprenant des moyens de traitement desdits signaux échantillonnés numériquement comportant:

- des moyens (13) de filtrage stéréophonique de deux signaux ($\underline{X}_1$, $\underline{X}_2$) respectivement obtenus à partir des premier et second signaux d'entrée ;
- des moyens (46) de filtrage monophonique d'un signal ($\underline{X}'$) obtenu à partir des premier et second signaux d'entrée ;
- des moyens (14-16) pour obtenir un écho estimé (y) des signaux d'entrée à partir des sorties ($\underline{Y}_1$, $\underline{Y}_2$, $\underline{Y}'$) des moyens de filtrage stéréophonique et monophonique ;
- des moyens (17) pour soustraire l'écho estimé (y) du signal d'observation (z) et produire un signal d'erreur (e) ; et
- des moyens d'adaptation (20, 48) pour mettre à jour les moyens de filtrage stéréophonique et monophonique à partir des signaux d'entrée et du signal d'erreur,

caractérisé par des moyens (44, 45) d'analyse de corrélations entre les premier et second signaux d'entrée, pour identifier des premières portions des deux signaux d'entrée dans lesquelles ils sont relativement décorrélés et des secondes portions des deux signaux d'entrée dans lesquelles ils sont plus corrélés que dans les premières portions, pour adresser aux moyens (13) de filtrage stéréophonique deux signaux ($\underline{X}_1$,$\underline{X}_2$) respectivement construits à partir des premières portions des deux signaux d'entrée, et pour adresser aux moyens (46) de filtrage monophonique un signal ($\underline{X}'$) construit à partir des secondes portions de l'un des deux signaux d'entrée.

20. Annuleur d'écho stéréophonique selon la revendication 19, dans lequel les moyens (13, 46) de filtrage stéréophonique et monophonique opèrent dans le domaine fréquentiel.

21. Annuleur d'écho stéréophonique selon la revendication 19 ou 20, dans lequel lesdites premières et secondes portions des signaux d'entrée ($x_1$, $x_2$) comprennent des portions temporelles desdits signaux.

22. Annuleur d'écho stéréophonique selon l'une quelconque des revendications 19 à 21, dans lequel lesdites premières et secondes portions des signaux d'entrée ($x_1$, $x_2$) comprennent des portions fréquentielles desdits signaux.

23. Annuleur d'écho stéréophonique selon l'une quelconque des revendications 19 à 22, dans lequel les moyens d'analyse (44) utilisent des valeurs de cohérence ($\Gamma(f)$) entre les premier et second signaux d'entrée ($x_1$, $x_2$) pour identifier lesdites premières et secondes portions.

24. Annuleur d'écho stéréophonique selon l'une quelconque des revendications 19 à 23, dans lequel le signal d'entrée dont les secondes portions sont utilisées pour construire le signal ($\underline{X}'$) adressé aux moyens (46) de filtrage monophonique est celui qui présente une avance temporelle par rapport à l'autre.

# FIG.1.

FIG.2.

EP 1 052 838 A1

FIG.3.

**Office européen des brevets**

## RAPPORT DE RECHERCHE EUROPEENNE

Numéro de la demande

EP 00 40 1266

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | EP 0 841 799 A (LUCENT TECHNOLOGIES INC) 13 mai 1998 (1998-05-13) * abrégé * --- | 1-24 | H04M9/08 |
| A | ALBERGE F ET AL: "A combined FDAF/WSAF algorithm for stereophonic acoustic echo cancellation" PROCEEDINGS OF THE 1998 IEEE INTERNATIONAL CONFERENCE ON ACOUSTICS, SPEECH AND SIGNAL PROCESSING, ICASSP '98 (CAT. NO.98CH36181), PROCEEDINGS OF THE 1998 IEEE INTERNATIONAL CONFERENCE ON ACOUSTICS, SPEECH AND SIGNAL PROCESSING, SEATTLE, WA, USA, 12-1, pages 1413-1416 vol.3, XP002132093 1998, New York, NY, USA, IEEE, USA ISBN: 0-7803-4428-6 * abrégé * --- | 1-24 | |
| A | BENESTY J ET AL: "Adaptive filtering algorithms for stereophonic acoustic echo cancellation" 1995 INTERNATIONAL CONFERENCE ON ACOUSTICS, SPEECH, AND SIGNAL PROCESSING. CONFERENCE PROCEEDINGS (CAT. NO.95CH35732), 1995 INTERNATIONAL CONFERENCE ON ACOUSTICS, SPEECH, AND SIGNAL PROCESSING, DETROIT, MI, USA, 9-12 MAY 1995, pages 3099-3102 vol.5, XP002132094 1995, New York, NY, USA, IEEE, USA ISBN: 0-7803-2431-5 * alinéa '0004! * --- -/-- | 1-24 | **DOMAINES TECHNIQUES RECHERCHES (Int.Cl.7)** <br> H04M |

Le présent rapport a été établi pour toutes les revendications

| Lieu de la recherche | Date d'achèvement de la recherche | Examinateur |
|---|---|---|
| LA HAYE | 4 juillet 2000 | Montalbano, F |

CATEGORIE DES DOCUMENTS CITES

X : particulièrement pertinent à lui seul
Y : particulièrement pertinent en combinaison avec un autre document de la même catégorie
A : arrière–plan technologique
O : divulgation non–écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

16

EP 1 052 838 A1

Office européen
des brevets

**RAPPORT DE RECHERCHE EUROPEENNE**

Numéro de la demande

EP 00 40 1266

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | AKIHIRO HIRANO ET AL: "DSP IMPLEMENTATION AND PERFORMANCE EVALUATION OF A COMPACT STEREO ECHO CANCELLER" PROCEEDINGS OF THE INTERNATIONAL CONFERENCE ON ACOUSTICS, SPEECH, ANDSIGNAL PROCESSING. (ICASSP),US,NEW YORK, IEEE, vol. CONF. 19, 1994, pages II-245-II-248, XP000528474 ISBN: 0-7803-1776-9 * abrégé * | 1-24 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 4 juillet 2000 | Montalbano, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 00 40 1266

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

04–07–2000

| Document brevet cité au rapport de recherche | Date de publication | Membre(s) de la famille de brevet(s) | Date de publication |
|---|---|---|---|
| EP 0841799 A | 13–05–1998 | US 5828756 A <br> CA 2215592 A <br> JP 10190848 A | 27–10–1998 <br> 12–05–1998 <br> 21–07–1998 |

EPO FORM P0460